# EUROPEAN PATENT APPLICATION

(11) **EP 4 550 626 A1**
(43) Date of publication of application: **07.05.2025**
(21) Application number: 23831456.1
(22) Date of filing: 27.06.2023
(51) Int. Cl.: H02J 50/40, B60L 5/00, B60L 53/122, B60M 7/00, H01F 38/14, H02J 7/00, H02J 50/12

(54) **WIRELESS POWER SUPPLY UNIT FOR VEHICLES, AND WIRELESS POWER SUPPLY SYSTEM FOR VEHICLES**

(30) Priority: 30.06.2022 JP 2022106671
(71) Applicant: SWCC Corporation, Kawasaki-shi, Kanagawa 210-0024 (JP)
(72) Inventor: MINOWA, Masahiro, Kawasaki-shi, Kanagawa 210-0024 (JP); NOUCHI, Kentaro, Kawasaki-shi, Kanagawa 210-0024 (JP); TAKAMURA, Ryota, Kawasaki-shi, Kanagawa 210-0024 (JP); MIURA, Kiyoshi, Kawasaki-shi, Kanagawa 210-0024 (JP); SAKAI, Kazuhiko, Kawasaki-shi, Kanagawa 210-0843 (JP)
(74) Representative: Impuls legal PartG mbB
(86) International application number: PCT/JP2023/023810
(87) International publication number: WO 2024/005016

(57) **Abstract**

A wireless power supply unit (100) for vehicles which wirelessly supplies power to a vehicle (60) and includes a plurality of power transmission coils (31) and a lower housing (41) which is positioned inside a road (50) and is equipped with said plurality of power transmission coils, wherein the plurality of power transmission coils (31) are arranged along one or more directions among a vehicle travel direction (D1) within a plane in the lower housing which is parallel to the road, and a direction (D2) which is perpendicular to said travel direction. The plurality of power transmission coils (31) in the wireless power supply unit (100) for vehicles may be arranged along a direction which is perpendicular to the vehicle travel direction on the road.

## Description

### Technical Field

The present invention relates to a vehicle wireless power supply unit and a vehicle wireless power supply system.

### Background Art

In recent years, a wireless power supply system that supplies power wirelessly from a power supply apparatus to a moving object such as a vehicle (hereinafter, referred to as "vehicle or the like") has been developed. For example, PTL 1 discloses an example in which a wireless power supply apparatus is installed inside a road. In wireless power supply to a vehicle during traveling, power is supplied wirelessly from the power transfer coil when a vehicle or the like including a power receiving coil passes over the power transfer coil installed inside a road. The power received by the power receiving coil is charged into a secondary battery or the like mounted on the vehicle or the like. By supplying power during traveling, it is possible to extend the travel distance while suppressing the increase in the capacity of the secondary battery.

In general, the transmission efficiency is better when the horizontal positions of the central axes of the power transfer coil and the power receiving coil, which perform power supply wirelessly, are close to each other. Therefore, when installing the power receiving coil in a road, it is necessary to perform the positioning accurately. Further, since the transmission efficiency is better as the distance between the coils is closer in the thickness direction, the positioning of the depth at which the power receiving coil is installed in the road needs to be performed accurately.

In order to install a power transfer coil inside a road, it is necessary to perform excavation work on the road. The power transfer coil installed inside the road needs to be positioned and installed at a predetermined position inside the road and at a predetermined depth in order to obtain a predetermined transfer efficiency.

### Citation List

### Patent Literature

PTL 1
Japanese Patent Application Laid-Open No. 2022-12377

### Summary of Invention

### Technical Problem

An object of the present invention is to provide a vehicle wireless power supply unit that makes it possible to easily install a power transfer coil in a road.

### Solution to Problem

A vehicle wireless power supply unit according to an embodiment of the present invention configured to perform power supply to a vehicle wirelessly, the vehicle wireless power supply unit including: a plurality of power transfer coils; and a lower housing that is installed inside a road and houses the plurality of power transfer coils, in which the plurality of power transfer coils are disposed along at least one of a traveling direction of the vehicle and a direction orthogonal to the traveling direction on one plane of the lower housing that is parallel to the road.

A vehicle wireless power supply system according to an embodiment of the present invention includes: the above-described vehicle wireless power supply unit; a control apparatus that supplies power to the power transfer coil; a cable that supplies power from the control apparatus to the vehicle wireless power supply unit; and a sensor that detects an intrusion of a vehicle into a predetermined region, in which the control apparatus performs control of whether to supply power to the power transfer coil based on an output from the sensor.

### Advantageous Effects of Invention

An embodiment of the present invention provides a vehicle wireless power supply unit and a vehicle wireless power supply system that make it possible to easily install a power transfer coil in a road.

### Brief Description of Drawings

FIG. 1 is a schematic diagram illustrating a configuration of a vehicle wireless power supply system according to an embodiment of the present invention;
FIG. 2 is a cross-sectional schematic view of the vehicle wireless power supply system according to an embodiment of the present invention as viewed from the side;
FIG. 3 is a schematic diagram illustrating an electrical connection in the vehicle wireless power supply system according to an embodiment of the present invention;
FIG. 4A is a cross-sectional schematic view illustrating a placement construction method of the vehicle wireless power supply system according to an embodiment of the present invention;
FIG. 4B is a cross-sectional schematic view illustrating the placement construction method of the vehicle wireless power supply system according to an embodiment of the present invention;
FIG. 4C is a cross-sectional schematic view illustrating the placement construction method of the vehicle wireless power supply system according to an embodiment of the present invention;
FIG. 4D is a cross-sectional schematic view illustrating the placement construction method of the vehicle wireless power supply system according to an embodiment of the present invention;
FIG. 4E is a cross-sectional schematic view illustrating the placement construction method of the vehicle wireless power supply system according to an embodiment of the present invention;
FIG. 5 is a schematic diagram illustrating an electrical connection in the vehicle wireless power supply system according to an embodiment of the present invention;
FIG. 6 is a cross-sectional schematic view of the vehicle wireless power supply system according to an embodiment of the present invention;
FIG. 7A is a top view of an upper housing according to an embodiment of the present invention;
FIG. 7B is a side view of a protruding portion according to an embodiment of the present invention;
FIG. 7C is a top view of the upper housing according to an embodiment of the present invention;
FIG. 8A is a side view of the upper housing according to an embodiment of the present invention;
FIG. 8B is a side view of the upper housing according to an embodiment of the present invention;
FIG. 9 is a top view of the upper housing according to an embodiment of the present invention;
FIG. 10A is a side cross-sectional view of a housing according to an embodiment of the present invention;
FIG. 10B is a top cross-sectional view of the housing according to an embodiment of the present invention;
FIG. 11A is a cross-sectional view of a support according to an embodiment of the present invention as viewed from the upper housing side;
FIG. 11B is a schematic view of the support according to an embodiment of the present invention as viewed from the side;
FIG. 11C is a side cross-sectional view of the housing according to an embodiment of the present invention;
FIG. 11D is an enlarged view of a main part of FIG. 12C;
FIG. 11E is a cross-sectional view of the support according to an embodiment of the present invention as viewed from the upper housing side;
FIG. 12A is a schematic view of the support according to an embodiment of the present invention as viewed from the side;
FIG. 12B is a cross-sectional view of the support according to an embodiment of the present invention as viewed from the upper housing side;
FIG. 12C is a cross-sectional view of the housing and the support according to an embodiment of the present invention as viewed from the side;
FIG. 12D is a cross-sectional view of the support according to an embodiment of the present invention as viewed from the upper housing side;
FIG. 13 is a top view of a lower housing according to an embodiment of the present invention;
FIG. 14 is a cross-sectional schematic view of the vehicle wireless power supply system according to an embodiment of the present invention as viewed from the side;
FIG. 15A is a detailed cross-sectional view of an end portion of the lower housing according to an embodiment of the present invention;
FIG. 15B is a detailed cross-sectional view of an end portion of the lower housing according to an embodiment of the present invention;
FIG. 15C is a detailed cross-sectional view of an end portion of the lower housing according to an embodiment of the present invention;
FIG. 15D is a detailed top view of an end portion of the lower housing according to an embodiment of the present invention;
FIG. 15E is a detailed top view of an end portion of the lower housing according to an embodiment of the present invention; and
FIG. 16 is a cross-sectional schematic view of the vehicle wireless power supply system according to an embodiment of the present invention as viewed from the side.

### Description of Embodiments

Hereinafter, embodiments of the present invention will be described with reference to the drawings and the like. The present invention can be implemented in many different forms and is not limited to the embodiments described below. The drawings may be represented schematically to make the description clearer, but they are merely examples and do not limit the interpretation of the present invention.

Further, the terms "first" and "second" for each element are used as convenient labels for distinguishing each element, and do not have any further meaning unless otherwise specified. In the drawings referred to in the present embodiment, the same reference numerals or similar reference numerals (reference numerals to which A, B, or 1, 2, and the like are added after numerals xxx) are given to the same portions or portions having the same functions, and the description of the repetition thereof may be omitted. Further, a part of the configuration may be omitted from the drawings. In addition, in a case where a person ordinarily skilled in the art to which the present invention pertains can recognize the present invention, no particular description will be given.

### Embodiment 1

A vehicle wireless power supply system according to Embodiment 1 of the present invention will be described in detail with reference to the drawings.

### 1-1. Configuration of Vehicle Wireless Power Supply System

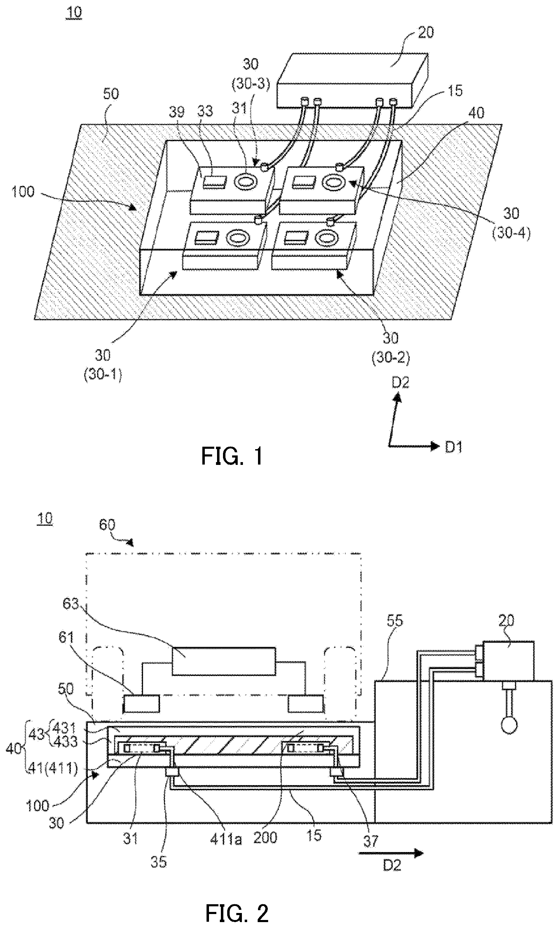

FIG. 1 is a schematic diagram illustrating a configuration of a vehicle wireless power supply system (hereinafter, referred to as power supply system 10). FIG. 2 is a cross-sectional schematic view of power supply system 10. As illustrated in FIGS. 1 and 2, power supply system 10 includes control apparatus 20 and a plurality of power transfer coil units 30. Control apparatus 20 and power transfer coil unit 30 are electrically connected to each other by cable 15.

Control apparatus 20 converts the AC power supplied from the branch cable to a predetermined frequency and controls the power transfer process to power transfer coil unit 30. Control apparatus 20 includes at least one of an inverter, a microcontroller, a central processing unit (CPU), and other arithmetic processing apparatuses. In the inverter, the power for transmission is converted to, for example, a frequency of 85 kHz. Control apparatus 20 (also referred to as an inverter box) is provided on a side portion of road 50 (for example, sidewalk 55). Power is supplied to control apparatus 20, for example, from a branch cable.

The plurality of power transfer coil units 30 are housed in housing 40 and are embedded in the inside (underground) of road 50. The plurality of power transfer coil units 30 and housing 40 may be collectively referred to as vehicle wireless power supply unit 100. Specifically, second power transfer coil unit 30-2 is disposed in first direction D1, which indicates the traveling direction of vehicle 60 (the direction in which road 50 extends), with reference to first power transfer coil unit 30-1. Third power transfer coil unit 30-3 is disposed in second direction D2, which is orthogonal to the first direction, with reference to the first power transfer coil unit. Fourth power transfer coil unit 30-4 is disposed in the second direction with respect to second power transfer coil unit 30-2 and in the first direction with respect to third power transfer coil unit 30-3. When it is not necessary to describe each power transfer coil unit separately, the power transfer coil unit will be described as power transfer coil unit 30.

Power transfer coil unit 30 includes power transfer coil 31, resonance capacitor 33, and case 39. In power transfer coil unit 30, an LC resonance circuit is formed with power transfer coil 31 and resonance capacitor 33.

As illustrated in FIG. 2, the installation location of power transfer coil 31 is underground 52 at a predetermined depth from the surface of road 50. When power receiving coil 61 provided in vehicle 60 traveling on road 50 is placed over power transfer coil unit 30, power transfer coil 31 and power receiving coil 61 face each other. At this time, the power transfer efficiency can be increased by reducing the distance between power receiving coil 61 mounted in vehicle 60 and power transfer coil 31 as much as possible. Specifically, the distance between power transfer coil 31 and power receiving coil 61 is preferably 5 centimeters or more and 50 centimeters or less. More preferably, the distance between power transfer coil 31 and power receiving coil 61 is 3 centimeters or more. When high-frequency power is supplied to power transfer coil 31 facing power receiving coil 61, magnetic flux (alternating current magnetic flux) is generated from power transfer coil 31 toward power receiving coil 61 by electromagnetic induction. At this time, an induced electromotive force is generated in power receiving coil 61. Thus, it is possible to wirelessly transfer power from power transfer coil 31 to power receiving coil 61.

The power received by power receiving coil 61 is stored in battery 63 mounted on vehicle 60. Battery 63 is a lithium-ion battery. Note that as well as a lithium-ion battery, other rechargeable batteries such as a nickel-hydrogen battery may be used for battery 63. Further, battery 63 includes those that use capacitors as storage elements.

As illustrated in FIG. 1, power transfer coil 31 has a circular shape with a hollow center. Power transfer coil 31 may have a spiral shape with a wound conductor. Further, power transfer coil 31 may be formed in a plate shape with a wound conductor.

The conductor of power transfer coil 31 is made of copper or a copper alloy including oxygen-free copper. Power transfer coil 31 may be made of, as well as copper, aluminum or other metal materials or alloy materials thereof.

Power transfer coil 31 may be, for example, a single wire, a plurality of single wires twisted together (Litz wire), or a plurality of single wires bundled together. Further, power transfer coil 31 may be an enamel wire obtained by coating a conductor with a synthetic resin material to perform an insulation process on it. As a synthetic resin material for coating a conductor, for example, a polyurethane resin, a polyester resin, a polyimide resin, and a polyamide resin may be used.

Power transfer coil 31 may be a so-called double-wound coil. In a case where power transfer coil 31 is a double-wound coil, each wire end portion 37 of power transfer coil 31 may be on the outside of the winding such that the thickness of power transfer coil 31 can be suppressed.

Case 39 is provided to accommodate power transfer coil 31 and resonance capacitor 33 inside. Case 39 is integrally formed with no gap between case 39 and power transfer coil 31 and resonance capacitor 33. In a case where there is a gap between case 39 and power transfer coil 31 and resonance capacitor 33, a filler may be disposed as necessary.

Housing 40 includes lower housing 41 and upper housing 43. After upper housing 43 is installed on lower housing 41, housing 40 is fastened and attached with a fastening member such as a screw. Note that upper housing 43 and lower housing 41 may be attached to each other by using an adhesive.

Lower housing 41 defines the position of power transfer coil unit 30. Lower housing 41 is configured in a flat plate shape. Lower housing 41 includes bottom surface portion 411 provided in a planar shape. In the present embodiment, four power transfer coil units 30 are disposed on the same plane, which is bottom surface portion 411 of lower housing 41. A portion of lower housing 41 in a region where each power transfer coil unit 30 is disposed may be recessed from the periphery for the purpose of positioning. Further, a protrusion for positioning power transfer coil unit 30 may be provided around a region of lower housing 41 where each power transfer coil unit 30 is disposed. Power transfer coil unit 30 is installed in lower housing 41 by being fastened with a fastening member such as a screw, for example.

Lower housing 41 is formed of a synthetic resin material. Desirably, the material of lower housing 41 has little influence on the electric field and the magnetic field formed by the wireless power supply from power transfer coil 31 to power receiving coil 61, and has little shape change due to temperature change. Preferably, the material of lower housing 41 is, for example, a material that has a small thermal expansion in a range from -30°C to 120°C. The material of lower housing 41 is, for example, polycarbonate resin. Further, the material of lower housing 41 may be a polypropylene resin.

Lower housing 41 may be provided with wiring hole 411a that extends through bottom surface portion 411 from the surface where power transfer coil 31 is installed to the surface opposite thereto. When inserted through wiring hole 411a, wire end portion 37 of each power transfer coil unit 30 and cable 15 outside of housing 40 can be connected. Further, wire end portion 37 is connected to cable 15 via connection terminal 35 (also referred to as a connector). By using connection terminal 35, the connection work can be facilitated.

Upper housing 43 has a highly load-resistive structure. Upper housing 43 includes upper surface portion 431 and side surface portion 433. In this example, upper housing 43 has the same shape as that of bottom surface portion 411 of lower housing 41 in top view. Side surface portion 433 is fastened to lower housing 41 using a fastening member (for example, a screw).

Upper housing 43 can be formed of the same material as that of lower housing 41. That is, desirably the material of upper housing 43 has little influence on the electric field and the magnetic field formed by the wireless power supply. Further, desirably the material of upper housing 43 has a small shape change due to a temperature change. Preferably, the material of upper housing 43 has little thermal expansion in a range from -30°C to 120°C. The material of upper housing 43 is, for example, polycarbonate resin. Further, the material of upper housing 43 may be polypropylene resin.

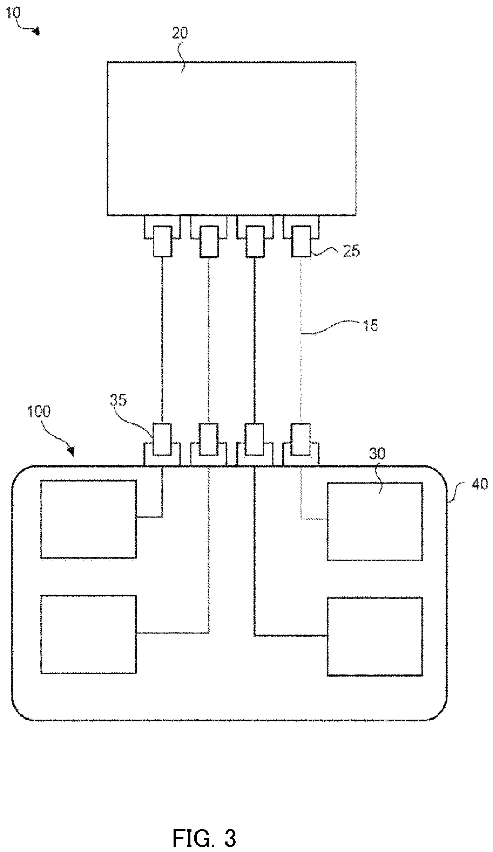

FIG. 3 is a schematic diagram illustrating an electrical connection in power supply system 10. As illustrated in FIG. 3, each power transfer coil unit 30 in housing 40 of power supply system 10 is connected to connection terminal 35. Connection terminal 35 of housing 40 and connection terminal 25 of control apparatus 20 are connected to each other via cable 15. That is, in power supply system 10 illustrated in FIG. 3, the number of cables 15 is the same as the number of power transfer coil units 30. Note that FIG. 3 illustrates cable 15 as a single line for the illustration of the connection path, but in practice one line includes two cables.

### 1-2. Placement Construction Method of Power Supply System 10

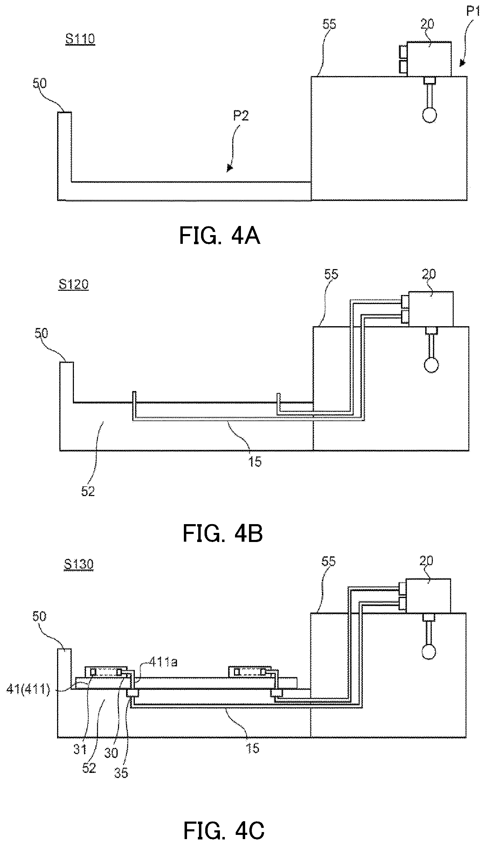

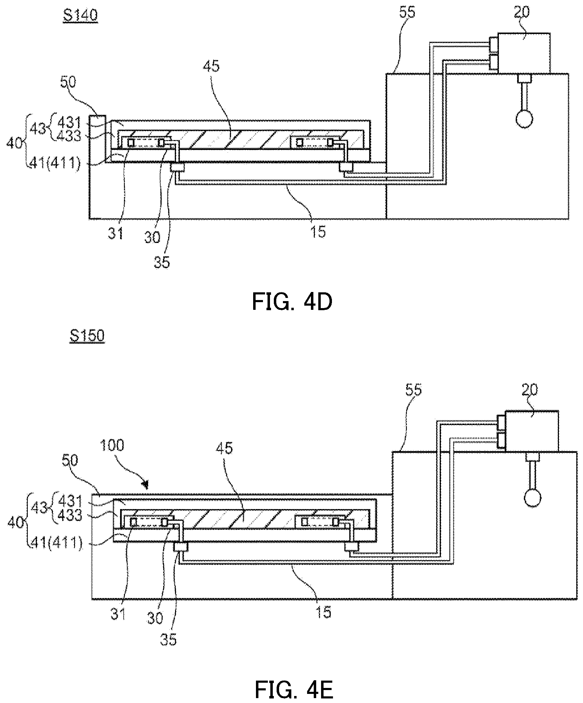

FIG. 4 is a cross-sectional view illustrating a placement construction method of power supply system 10. First, as illustrated in FIG. 4A, control apparatus 20 is installed at a predetermined position (first position P1) on the side of road 50 (sidewalk 55) (S110). Further, in FIG. 4A, position 2 (second position P2) corresponding to installation position P1 of control apparatus 20 on the road is dug up. At this time, the road is dug up to a depth such that housing 40 and cable 15 can be embedded in road 50. Next, as illustrated in FIG. 4B, cable 15 is installed in underground 52 (S120). Cable 15 may be embedded such that the cable is partially exposed from the ground and is fixed as necessary.

Next, as illustrated in FIG. 4C, lower housing 41 is installed in the ground (S130). At this time, power transfer coil unit 30 is disposed in lower housing 41 in advance. Cable 15 is connected to connection terminal 35. Further, at this time, cable 15 is connected to connection terminal 35 through wiring hole 411a provided in bottom surface portion 411 of lower housing 41. Note that after lower housing 41 is installed in underground 52, power transfer coil unit 30 may be disposed.

Next, as illustrated in FIG. 4D, upper housing 43 and filler 45 are attached to lower housing 41 in which power transfer coil unit 30 is disposed (S140). Note that filler 45 may be filled after upper housing 43 is installed in lower housing 41 in which power transfer coil unit 30 is disposed.

Finally, as illustrated in FIG. 4E, the upper surface and the side portion of housing 40 are filled with soil, gravel, concrete, or the like, and road 50 is paved with concrete or an asphalt mixture (S150). Thus, the placement construction processing of the wireless power supply system is completed. Note that the above-described placement construction method may be changed as necessary. Further, housing 40 may be disposed underground after upper housing 43 is attached to lower housing 41 on the ground.

During road construction, the passage of vehicles on the road under construction is halted. Desirably the period for road construction is short. In the present embodiment, the position at which the plurality of power transfer coil units 30 are disposed is defined in advance on lower housing 41. Thus, according to the present embodiment, it is possible to easily and simply position a plurality of power transfer coils 31 as compared to a case where power transfer coil unit 30 is disposed in the ground. Thus, the installation work of power transfer coil unit 30 at the road can be completed in a short time. That is, it is possible to shorten the time for which the road is blocked for the installation work of power transfer coil unit 30.

### Embodiment 2

In the present embodiment, a power supply system having a configuration different from that in Embodiment 1 will be described. Specifically, a power supply system that differs in the configuration of the connection terminal will be described.

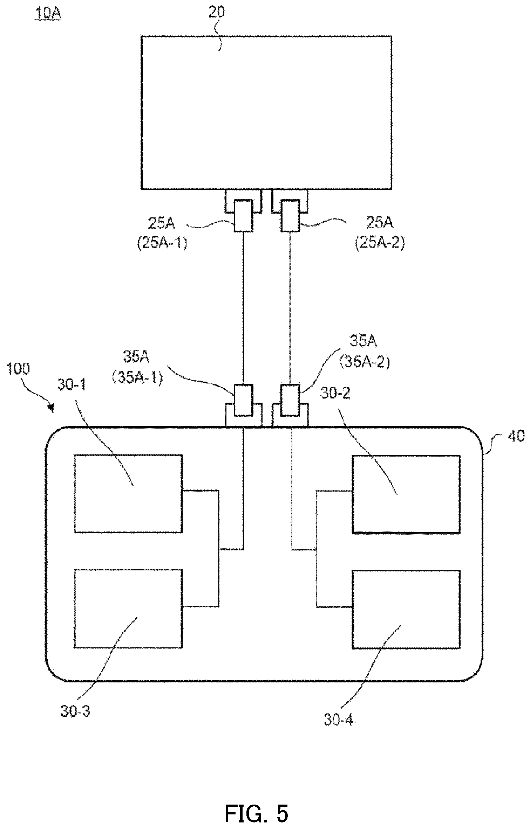

FIG. 5 is a schematic diagram illustrating an electrical connection in power supply system 10A. As illustrated in FIG. 5, first power transfer coil unit 30-1 and third power transfer coil unit 30-3 in power supply system 10A are connected in parallel and are connected to first common terminal 35A-1. Second power transfer coil unit 30-2 and fourth power transfer coil unit 30-4 are connected in parallel and are connected to second common terminal 35A-2. First common connection 35A-1 of housing 40 and connection terminal 25A-1 of control apparatus 20, and second common connection 35A-2 of housing 40 and connection terminal 25A-2 of control apparatus 20 are connected by cable 15. That is, in power supply system 10A described in FIG. 5, the number of cables 15 is less than the number of power transfer coils 31. First power transfer coil unit 30-1 and third power transfer coil unit 30-3 are controlled at the same timing by one control of control apparatus 20. The same applies to second power transfer coil unit 30-2 and fourth power transfer coil unit 30-4. First power transfer coil unit 30-1 and third power transfer coil unit 30-3 correspond to the rear wheel side, and second power transfer coil unit 30-2 and fourth power transfer coil unit 30-4 correspond to the front wheel side. In the case of the present embodiment, the number of cables 15 and connection terminals 35 may be smaller than in the Embodiment 1, and thus, the time required for connecting the terminal on the power transfer coil unit 30 side and the terminal on the control apparatus 20 side in the construction can be shortened.

Note that first power transfer coil unit 30-1 and third power transfer coil unit 30-3 may be connected in series and may be connected to first common terminal 35A-1. Second power transfer coil unit 30-2 and fourth power transfer coil unit 30-4 may be connected in series and may be connected to second common terminal 35A-2. In the case of the present embodiment, the number of cables 15 and connection terminals 35 may be further reduced compared to the Embodiment 2, and thus, the time required for connecting the terminal on the power transfer coil unit 30 side and the terminal on the control apparatus 20 side in the construction can be further shortened.

### Embodiment 3

In the present embodiment, a power supply system having a configuration different from that in Embodiment 1 will be described. Specifically, a power supply system including a sheet with a connection terminal on the lower side of the lower housing will be described.

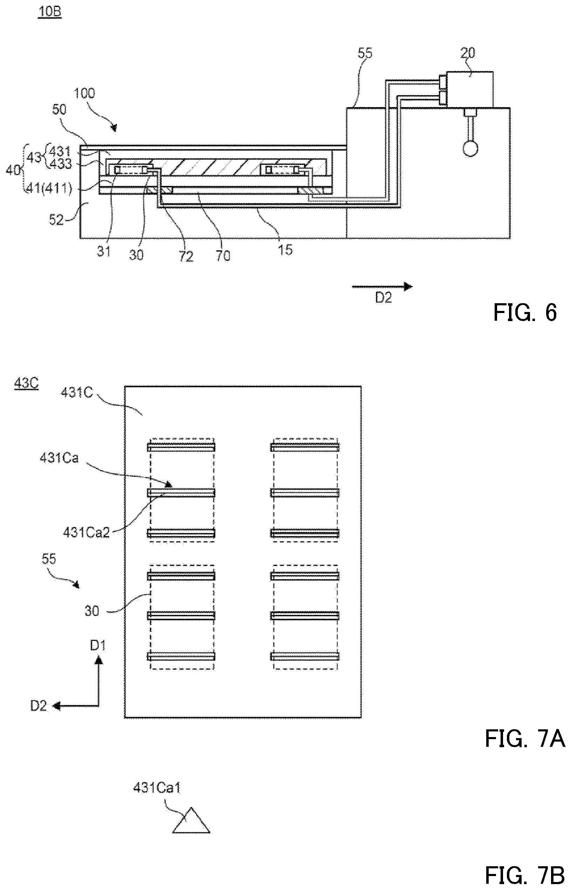

FIG. 6 is a cross-sectional schematic view of power supply system 10B. As illustrated in FIG. 6, power supply system 10B includes sheet body 70, in addition to control apparatus 20, the plurality of power transfer coil units 30, and housing 40.

Sheet body 70 is provided on the lower side of lower housing 41. Sheet body 70 may include connecting part 72 (also referred to as a conductive section). Connecting part 72 is provided corresponding to each power transfer coil unit 30. Thus, even in a case where power transfer coil unit 30 is not disposed in lower housing 41, the positioning of power transfer coil unit 30 is facilitated. Further, in the present embodiment, cable 15 disposed in underground 52 and wire end portion 37 connected to power transfer coil unit 30 can be connected to each other via connecting part 72. Connecting part 72 has a function as a connection terminal (connector). For this reason, cable 15 and wire end portion 37 can be easily connected. Accordingly, it is possible to complete the installation work of power transfer coil unit 30 in a shorter time.

### Embodiment 4

In the present embodiment, a power supply system different from that in Embodiment 1 will be described. Specifically, a power supply system including a guidance portion at upper surface portion 431C of upper housing 43 will be described.

FIG. 7A is a top view of upper housing 43C, and FIG. 7B is a side view of the protruding portion. As illustrated in FIG. 7A, in the present embodiment, a plurality of protruding portions 431Ca separated from each other in the traveling direction of vehicle 60 are provided at upper surface portion 431C of upper housing 43C (first direction D1) corresponding to the location where power transfer coil unit 30 is disposed. The driver of vehicle 60 drives vehicle 60 with reference to protruding portion 431Ca and travels on road 50. Specifically, the driver recognizes the vibration caused by vehicle 60 passing over protruding portion 431Ca and controls, for example, the speed of vehicle 60 or the position at which vehicle 60 travels. Vehicle 60 passes over power transfer coil unit 30 disposed inside road 50. At this time, by controlling the position of vehicle 60 such that the vibration with protruding portion 431Ca is generated, the driver can cause power receiving coil 61 provided in vehicle 60 to face the position of power transfer coil 31, thereby enhancing the power transfer efficiency to vehicle 60. In the above, the plurality of protruding portions 431Ca can be used as a guidance portion for guiding vehicle 60 to the location where the power transfer coil is disposed.

Further, upper surface portion 431C of upper housing 43A may be exposed at the surface of road 50. By exposing upper surface portion 431C of upper housing 43A at the surface of road 50, the distance to power receiving coil 61 can be further reduced. Further, in this case, since upper surface portion 431C includes the plurality of protruding portions 431Ca, slipping is prevented when vehicle 60 passes through upper surface portion 431C.

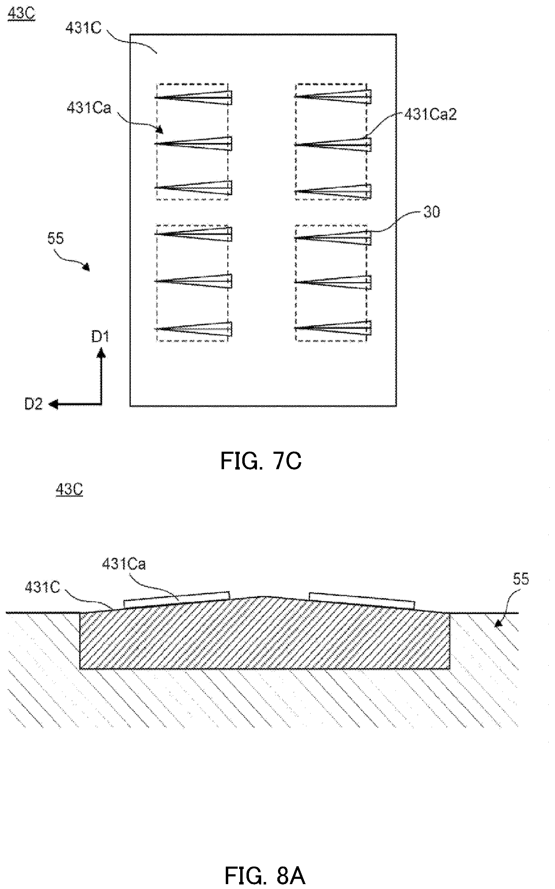

Further, as illustrated in FIG. 7C, short portion 431Ca1 of protruding portion 431Ca may have a tapered cross-sectional shape. Thus, the slippage can be more effectively prevented. Further, desirably longitudinal portion 431Ca2 of protruding portion 431Ca extends in a direction (second direction D2) orthogonal to the traveling direction (first direction D1) of vehicle 60 in order to facilitate the flow of rainwater to the side of road 50. Further, as illustrated in FIG. 7C, protruding portion 431Ca may have a shape that narrows toward the side portion (sidewalk 55) of road 50. Thus, the rainwater can be further efficiently carried to the side portion of road 50.

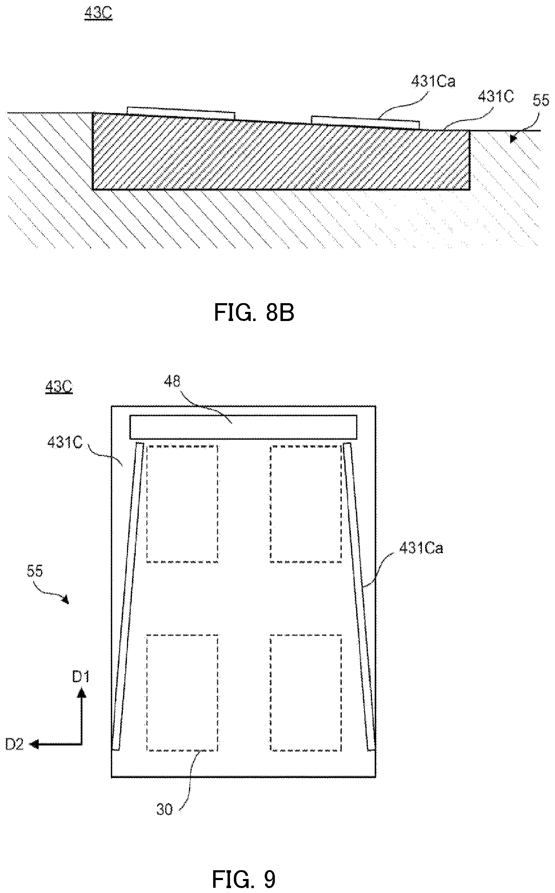

FIGS. 8A and 8B are cross-sectional views of upper housing 43C. As illustrated in FIG. 8A, upper surface portion 431C of upper housing 43C may be inclined toward both side portions (sidewalks 55) from the center of road 50. Further, as illustrated in FIG. 8B, upper surface portion 431C of upper housing 43C may be uniformly inclined from one side portion (sidewalk 55) of road 50 to the other side portion. Thus, the rainwater can be efficiently carried to the side portion of road 50.

Note that in the present embodiment, in a case where upper surface portion 431C is not exposed, a pavement member such as an asphalt mixture may be provided on upper housing 43C. In this case, upper surface portion 431C may constitute a part of the surface of road 50.

Further, in the present embodiment, an example in which protruding portion 431Ca is provided on upper surface portion 431C has been described, but a recessed portion may be provided on upper surface portion 431C, or a colored sign such as a white line or a display device such as digital signage may be provided on upper surface portion 431C. All of them may be used as guidance portions for guiding vehicle 60 to a location where the power transfer coil is disposed.

Further, in the present embodiment, an example in which the protruding portion is provided along second direction D2 orthogonal to first direction D1 has been described, but the present invention is not limited thereto. FIG. 9 is a top view of upper housing 43C. As illustrated in FIG. 9, protruding portion 431Ca may be provided along first direction D1 (the traveling direction of vehicle 60) toward stop line 48 disposed orthogonal to the traveling direction of road 50 or along a direction inclined inward of upper housing 43C from the first direction. Thus, by traveling on road 50 with protruding portion 431Ca as a guide, the driver can ensure that vehicle 60 passes over power transfer coil unit 30. Thus, power transfer coil 31 and power receiving coil 61 are disposed to face each other while suppressing the positional deviation, which can increase the power transfer efficiency to vehicle 60.

### Embodiment 5

In the present embodiment, a power supply system different from that in Embodiment 1 will be described. Specifically, a power supply system including a support provided between the upper housing and lower housing 41 will be described.

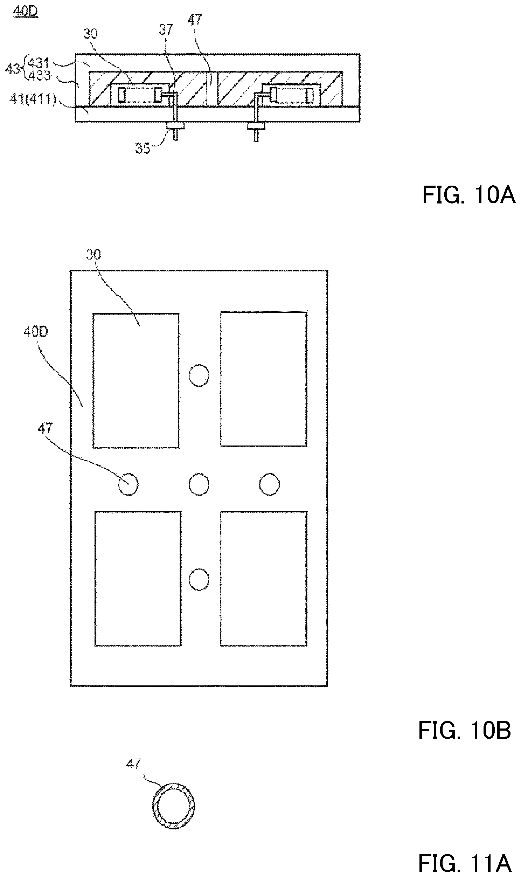

FIG. 10A is a cross-sectional view of housing 40D. FIG. 10B is a plan view of housing 40D. As illustrated in FIG. 10A, in the present embodiment, housing 40D includes support 47 in addition to lower housing 41 and upper housing 43. In this example, support 47 is disposed between power transfer coil units 30 adjacent to each other. Support 47 is provided between upper housing 43 and lower housing 41. Support 47 has a function of supporting upper housing 43 and lower housing 41. The same material as that of upper housing 43 may be used for the support. With support 47, the rigidity of housing 40 can be increased.

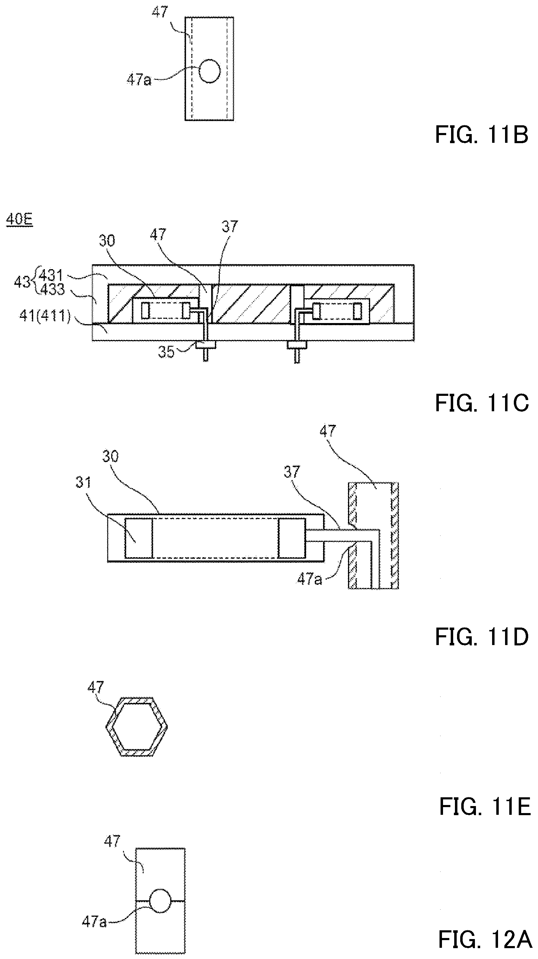

FIG. 11A illustrates a cross-section of support 47 as viewed from the upper housing 43 side. FIG. 11B is a schematic view of support 47 as viewed from the side. FIGS. 11C and 11D are a cross-sectional view and a detailed view of housing 40E. As illustrated in FIGS. 11A and 11B, support 47 may have a cylindrical shape as viewed from the lower housing 41 or the upper housing 43 side. Further, as illustrated in FIG. 11B, support 47 may include take-out hole 47a into which cables can be inserted in a part of the longitudinal direction (height direction). Further, as illustrated in FIG. 11C, support 47 may be provided adjacent to power transfer coil unit 30. In a case where support 47 is disposed in the vicinity of wire end portion 37 of power transfer coil unit 30, wire end portion 37 connected to connection terminal 35 of power transfer coil unit 30 is routed into support 47 through hole 45a and is led out to the outside of housing 40. Thus, it is possible to increase the rigidity of housing 40C and to facilitate the routing of wire end portion 37. Thus, according to the present embodiment, it is possible to complete the installation work of power transfer coil unit 30 in a short time with easy and simple positioning.

Note that in the example described in the present embodiment, support 47 is provided locally, such as between adjacent power transfer coil units 30, but the present invention is not limited thereto. Support 47 may have a hexagonal cylindrical shape as illustrated in FIG. 11E, and a plurality of supports 47 may be provided adjacent to each other in a honeycomb shape in housing 40. Thus, the rigidity of housing 40 can be further increased. Further, support 47 may have a polygonal cylindrical shape such as a quadrangular or octagonal cylindrical shape as well as a hexagonal cylindrical shape as a cylindrical shape.

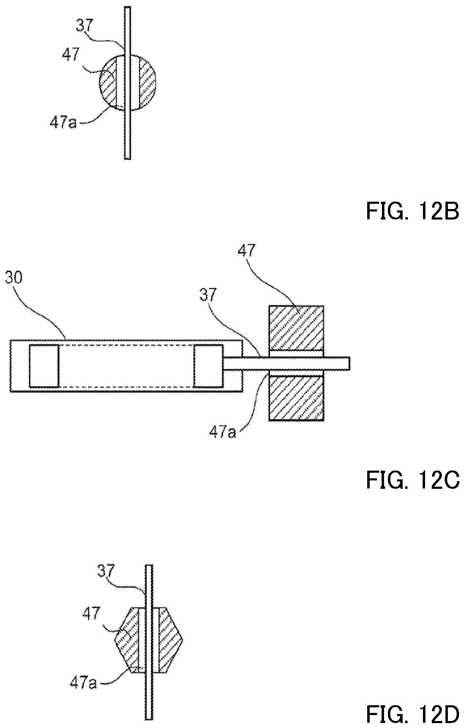

Further, in the present embodiment, an example in which support 47 has a cylindrical shape as viewed from the side of lower housing 41 or upper housing 43 has been described, but the present invention is not limited thereto. FIG. 12A is a schematic view of support 47 as viewed from the side. FIG. 12B is a cross-sectional view of support 47 as viewed from the top surface. FIG. 12C is a cross-sectional schematic view of housing 40E. As illustrated in FIGS. 12A to 12C, support 47 may be provided separately on the upper housing 43 side and the lower housing 41 side. In this case, support 47 may have a cylindrical shape and include hole 45a into which cables can be inserted in a part in the height direction. Thus, wire end portion 37 connected to power transfer coil unit 30 is easily routed. Note that in this case, support 47 is not limited to a cylinder, and may be a polygonal column such as a hexagonal column as illustrated in FIG. 12D.

### Embodiment 6

In the present embodiment, a power supply system different from that in Embodiment 1 will be described. Specifically, a power supply system including a groove for drainage in lower housing 41 will be described.

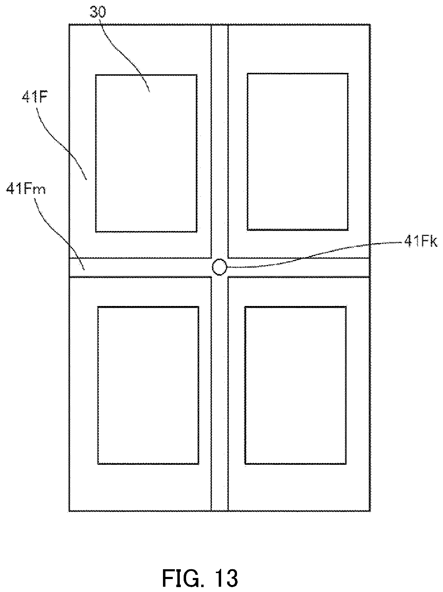

FIG. 13 is a schematic view of lower housing 41F according to the present embodiment. As illustrated in FIG. 13, lower housing 41F includes groove Fm and through hole 41Fk. Groove Fm is formed to divide the surface of lower housing 41F, where the plurality of power transfer coil units 30 are installed, into each region where power transfer coil unit 30 is installed. Through hole 41Fk is provided in a part of lower housing 41F, continuously with groove 41Fm. Thus, in a case where water enters the inside of the housing, it is possible to drain the water on the surface side of lower housing 41, where power transfer coil 31 is installed, to the side opposite to the surface where power transfer coil 31 is installed in lower housing 41 by causing the water to flow through groove Fm and through hole Fk.

### Embodiment 7

In the present embodiment, a power supply system different from that in Embodiment 1 will be described. Specifically, a power supply system including a sensor will be described.

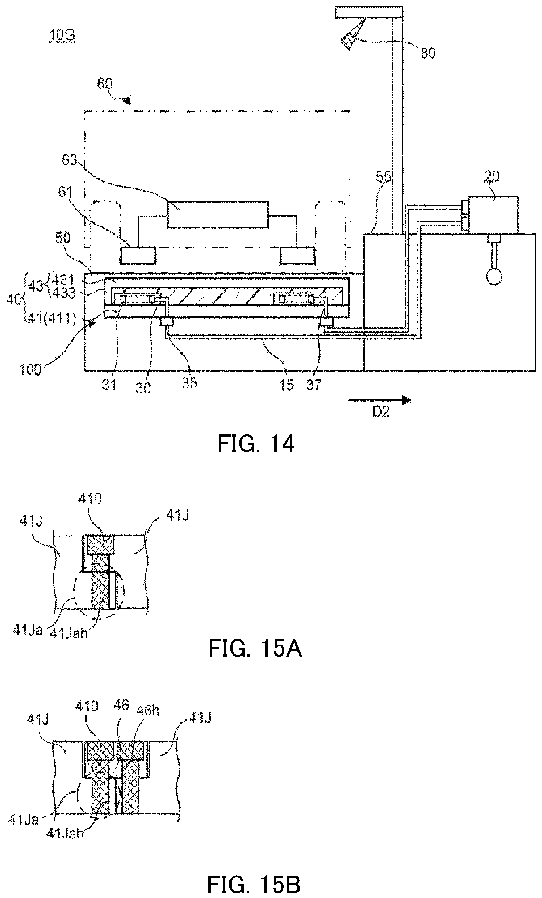

FIG. 14 is a cross-sectional schematic view of power supply system 10G. As illustrated in FIG. 14, power supply system 10G includes control apparatus 20 and sensor 80. Sensor 80 may be disposed in a part of sidewalk 55, may be disposed in power transfer coil unit 30, or may be disposed inside housing 40. For example, when the sensor detects that vehicle 60 has entered a predetermined area, control apparatus 20 may cause a current to flow through power transfer coil 31. Further, control apparatus 20 may include a power transfer switch that opens and closes the output to power transfer coil 31.

### Embodiment 8

In the present embodiment, a power supply system different from that in Embodiment 1 will be described. Specifically, a wireless power supply unit including a coupling portion that couples the housings will be described.

FIG. 15A is an enlarged cross-sectional view illustrating an end portion of lower housing 41J. Lower housing 41J includes coupling portion 41Ja at an end portion of vehicle 60 in the traveling direction (first direction D1). Lower housing 41J can be coupled to another lower housing 41J adjacent in the traveling direction of the vehicle by coupling portion 41Ja and fastening member 410. Coupling portion 41a includes a plurality of coupling holes 41Jah extending through it in the thickness direction. Lower housing 41 is coupled to another lower housing 41 at an end in the traveling direction of the vehicle by coupling portion 41Ja. The end of lower housing 41 may be in contact with and coupled to the end of another lower housing 41.

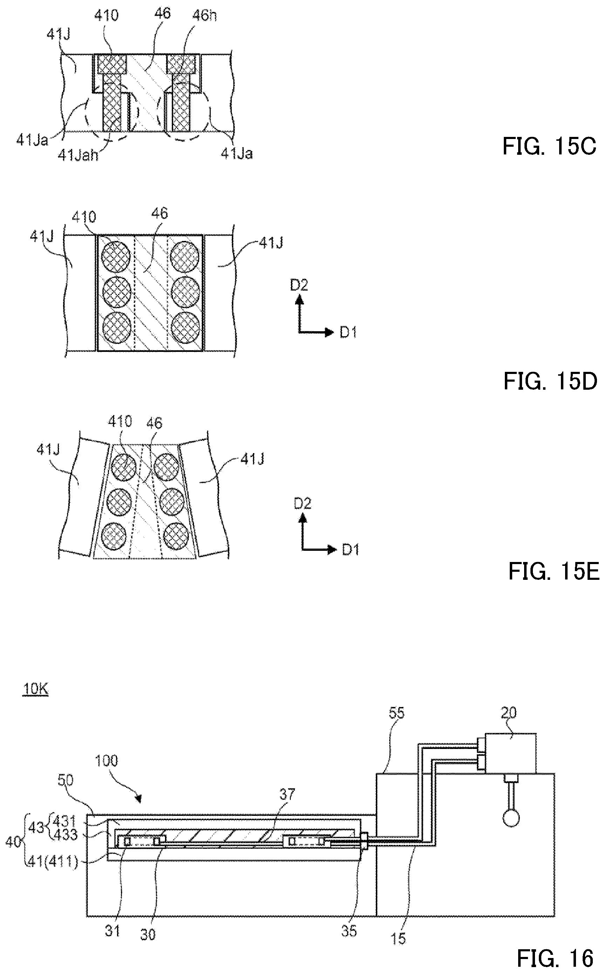

FIGS. 15B and 15C are views including an end portion of lower housing 41. FIGS. 15D and 15E are plan views illustrating an end portion of lower housing 41J. Lower housing 41J may be coupled to another lower housing 41J via gap member 46. In this case, gap member 46 connects front coupling portion 41Ja in the vehicle traveling direction in one lower housing 41J and rear coupling portion 41a in the vehicle traveling direction in the other lower housing 41 by fastening member 410. As illustrated in FIG. 15C, gap member 46 has a step shape corresponding to coupling portion 41Ja of lower housing 41J, and includes coupling hole 46h corresponding to coupling hole 41Jah of coupling portion 41Ja of lower housing 41J. Gap member 46 has a stepped shape at each of one end side connected to one lower housing 41J and the other end side connected to the other lower housing 41J.

One end side coupling portion 41Ja and the other end side coupling portion 41Ja of gap member 46 may be parallel to each other as illustrated in FIG. 15D, or may have a predetermined angle as illustrated in FIG. 15E. As illustrated in FIG. 15E, in a case where one end side and the other end side of gap member 46 have a predetermined angle, another lower housing 41J that is coupled by gap member 46 has a predetermined angle with respect to one lower housing 41J. Thus, even on a curved road, lower housing 41J can be installed in a predetermined position.

### Modification Example

Within the scope of the inventive concept, those skilled in the art will appreciate that various modifications and variations can be made, and it is understood that such modifications and variations are within the scope of the present invention. For example, the present invention includes, as long as the present invention includes the gist of the present invention, those in which a person skilled in the art appropriately adds, deletes, or changes the design of a component, or adds, omits, or changes a condition of a process with respect to each of the above-described embodiments.

Upper housing 43 may have a material different from that of lower housing 41. Upper housing 43 preferably includes a material with moisture permeability to prevent water from remaining on road 50. On the other hand, lower housing 41 may include a material with moisture absorption properties to prevent moisture from remaining in the vicinity of power transfer coil unit 30. As a moisture-absorbing material, for example, a nylon resin can be used.

In the Embodiment 1 of the present invention, an example in which four power transfer coil units are disposed in lower housing 41 has been described, but the present invention is not limited thereto. For example, for compatibility with two-wheeled vehicles, lower housing 41 may have two power transfer coil units disposed along the traveling direction of the two-wheeled vehicle. Further, for compatibility with large trucks, lower housing 41 may be configured to accommodate, for example, eight power transfer coil units. In this case, a total of eight power transfer coil units may be disposed, i.e., four along the traveling direction of the vehicle and two along the direction orthogonal to the traveling direction of the vehicle.

In the Embodiment 1 of the present invention, an example in which upper surface portion 431 of upper housing 43 has the same shape as that of bottom surface portion 411 of lower housing 41 in top view has been described, but the present invention is not limited thereto. The shape of the surface of upper surface portion 431 of upper housing 43 may be larger than that of bottom surface portion 411 of lower housing 41 in top view. Thus, it is possible to prevent rainwater from directly entering the inside of housing 40.

In the Embodiment 1 of the present invention, an example in which upper housing 43 includes side surface portion 433 has been described, but the present invention is not limited thereto. Lower housing 41 may have a side surface portion instead of upper housing 43. In this case, by making the shape of the surface of upper surface portion 431 of upper housing 43 larger than the shape of the surface of bottom surface portion 411 of lower housing 41, it is possible to use upper housing 43 as a lid and to prevent rainwater from directly entering the inside of housing 40.

In the Embodiment 1 of the present invention, upper housing 43 is formed of a synthetic resin material, but it may include reinforced fibers in addition to the synthetic resin material from the viewpoint of improving strength. In this case, the reinforced fiber provided in upper housing 43 may be used as long as it is not a material that shields the magnetic field and the electric field when power is supplied wirelessly between power transfer coil 31 and the power receiving coil. For example, upper housing 43 may be formed of fiber reinforced plastics (FRP). In a case where upper housing 43 is formed of FRP, for example, glass fiber, carbon fiber, or aramid fiber may be used as the reinforcing fiber.

In the Embodiment 1 of the present invention, an example in which cable 15 is connected from the lower side of lower housing 41 has been described, but the present invention is not limited thereto. FIG. 16 is a cross-sectional view of power supply system 10K. As illustrated in FIG. 16, for example, connection terminal 35 for connecting cable 15 to the side surface portion may be provided. In this case, the side surface portion may be provided in any of lower housing 41 or upper housing 43. Thus, it is possible to reduce the excavation amount of earth and sand in the road portion, and to complete the installation work of power transfer coil unit 30 in a shorter time.

Lower housing 41 only needs to be capable of positioning the power transfer coil unit, and may have flexibility. Lower housing 41 is, for example, a sheet, and may be rolled into a roll shape.

According to an embodiment of the present invention, there is provided vehicle wireless power supply unit 100 that performs power supply to a vehicle wirelessly, the vehicle wireless power supply unit including: a plurality of power transfer coils; and a lower housing that is installed inside a road and houses the plurality of power transfer coils, wherein the plurality of power transfer coils are disposed along at least one of a traveling direction of the vehicle and a direction orthogonal to the traveling direction on one plane of the lower housing that is parallel to the road. Thus, the plurality of power transfer coils 31 can be positioned easily and simply as compared to a case where power transfer coil unit 30 is disposed in the ground. Further, vehicle wireless power supply unit 100 according to an embodiment of the present invention can support the unit with a larger area than in the case of power transfer coil unit 30 alone, thus preventing the depth and inclination of the coil in the ground from changing. Further, since vehicle wireless power supply unit 100 according to an embodiment of the present invention is heavier than power transfer coil unit 30 alone, the response can be reduced even when vibration is received from the outside, and an improvement in durability can be expected. Further, vehicle wireless power supply unit 100 according to an embodiment of the present invention makes it possible to embed the coil in an accurate position regardless of the skill of the construction worker.

In vehicle wireless power supply unit 100, the plurality of power transfer coils 31 may be disposed along a direction orthogonal to the traveling direction of the vehicle. Thus, it is possible to easily and simply position the plurality of power transfer coils 31 as compared to a case where power transfer coil unit 30 is disposed in the ground along a direction orthogonal to the traveling direction of vehicle 60 on road 50.

In vehicle wireless power supply unit 100, lower housing 41 may include groove 41Fm for drainage at the surface where power transfer coil 31 is disposed. Thus, it is possible to drain water on the surface side of lower housing 41 where power transfer coil 31 is installed by causing water to flow through groove Fm.

In vehicle wireless power supply unit 100, lower housing 41 includes through hole 41Fk that extends through it from one side to the other side in the surface where the plurality of power transfer coils 31 of lower housing 41 are disposed, and through hole 41Fk may be provided continuously with groove 41Fm. Thus, it is possible to drain water on the surface side of lower housing 41 where power transfer coil 31 is installed to the side opposite to the surface where power transfer coil 31 is installed is installed in lower housing 41 by allowing the water to flow through hole 41Fk.

In vehicle wireless power supply unit 100, lower housing 41 may include coupling portion 41Ja for coupling with another lower housing 41 at the front and rear ends in the traveling direction of vehicle 60. Thus, since the position where lower housing 41 is installed is specified by coupling portion 41Ja provided at the end of the vehicle in the traveling direction and another lower housing 41, the positioning can be easily performed. Further, since lower housing 41 is coupled to another lower housing 41 by coupling portion 41Ja provided at an end in the traveling direction of vehicle 60, it is possible to disperse the traveling force of vehicle 60 that is transmitted through road 50.

Vehicle wireless power supply unit 100 may include upper housing 43 provided on lower housing 41, which withstands a load from above and prevents water from entering the inside. Thus, housing 40 can withstand the force transmitted through road 50 and can prevent water from entering the inside of housing 40.

In vehicle wireless power supply unit 100, support 47 that transmits a load from upper housing 43 to lower housing 41 may be provided. Thus, housing 40 can further withstand a load from above.

In vehicle wireless power supply unit 100, support 47 has a cylindrical shape for accommodating cables such that one end of the support in the axial direction of the cylindrical shape is in contact with upper housing 43 whereas the other end is in contact with lower housing 41, and, support 47 may include a take-out hole for cables 47a at a position between upper housing 43 and lower housing 41. Thus, support 47 can transmit the load from the upper housing to the lower housing, and can take out the wire accommodated in the cylindrical shape from take-out hole 47a, thus simplifying the routing of the wire in housing 40.

In upper housing 43 of vehicle wireless power supply unit 100, upper surface 431 may be paved as road 50, and upper surface 411 may constitute a part of the surface of road 50. Thus, since it is not necessary to pave the upper surface 431 of housing 40 after housing 40 is embedded in road 50, vehicle wireless power supply unit 100 can shorten the construction period.

Vehicle wireless power supply unit 100 may include a guidance portion that guides vehicle 60 on upper surface 431 of upper housing 43. Thus, vehicle wireless power supply unit 100 is capable of guiding vehicle 60 to a predetermined position on upper surface 431 of upper housing 43 by the guidance portion.

In vehicle wireless power supply unit 100, the guidance portion has a protrusion shape in cross section and a rectangular shape in plan view, and a front end of the guidance portion with the rectangular shape in a traveling direction of the vehicle may be disposed on a center side in a direction orthogonal to the traveling direction of the vehicle with respect to a rear end of the guidance portion with the rectangular shape in the traveling direction of the vehicle. Thus, vehicle wireless power supply unit 100 is capable of guiding vehicle 60 to a predetermined position by generating vibration at vehicle 60 through the wheels, thus causing the driver to recognize the traveling position.

In vehicle wireless power supply unit 100, the plurality of power transfer coils 31 may be connected in parallel. Thus, it is possible to perform power supply to the plurality of power transfer coils 31 of vehicle wireless power supply unit 100 with a smaller number of cables 15.

According to an embodiment of the present invention, a vehicle wireless power supply system includes: the above-described vehicle wireless power supply unit 100; control apparatus 20 that supplies power to power transfer coil 31; cable 15 that supplies power from control apparatus 20 to vehicle wireless power supply unit 100; and sensor 80 that detects an intrusion into a predetermined region of a vehicle, and control apparatus 20 performs control of whether to supply power to power transfer coil 31 based on an output from sensor 80. Thus, the vehicle wireless power supply system can prevent waste of power by performing control in such a manner that control apparatus 20 supplies power to the plurality of power transfer coils 31 when the vehicle intruding into a predetermined region is detected by sensor 80, and that control apparatus 20 does not supply power to the plurality of power transfer coils 31 when sensor 80 does not detect the vehicle.

### Reference Signs List

10.. Power supply system
15.. Cable
20.. Control apparatus
25.. Connection terminal
30.. Power transfer coil unit
31.. Power transfer coil
33.. Resonance capacitor
35.. Connection terminal
35A-1.. First common terminal
35A-2.. Second common terminal
37.. Wire end portion
39.. Case
40.. Housing
41.. Lower housing
41Fm.. Groove
41Fk.. Through hole
43.. Upper housing
45.. Filler
45a.. Hole
47.. Support
50.. Road
55.. Sidewalk
60.. Vehicle
61.. Power receiving coil
63.. Battery
70.. Sheet body
72.. Connecting part
80.. Sensor
100.. Vehicle wireless power supply unit
411.. Bottom surface portion
411a.. Wiring hole
431.. Upper surface portion
431Ca.. Protruding portion
431Ca1.. Short portion
431Ca2.. Longitudinal portion
433.. Side surface portion

## Claims

1. A vehicle wireless power supply unit configured to perform power supply to a vehicle wirelessly, the vehicle wireless power supply unit comprising:
a plurality of power transfer coils; and
a lower housing installed inside a road and housing the plurality of power transfer coils,
wherein the plurality of power transfer coils are disposed along at least one of a traveling direction of the vehicle and a direction orthogonal to the traveling direction on one plane of the lower housing that is parallel to the road.

2. The vehicle wireless power supply unit according to claim 1, wherein the plurality of power transfer coils are disposed along the direction orthogonal to the traveling direction of the vehicle.

3. The vehicle wireless power supply unit according to claim 1, wherein the lower housing includes a groove for drainage at a surface where the power transfer coil is disposed.

4. The vehicle wireless power supply unit according to claim 3,
wherein the lower housing includes a through hole extending through from one side to the other side in a surface of the lower housing where the plurality of power transfer coils are disposed, and
wherein the through hole is provided continuously with the groove.

5. The vehicle wireless power supply unit according to claim 1, wherein the lower housing includes a coupling portion for coupling with another lower housing at a front end portion and a rear end portion in the traveling direction of the vehicle.

6. The vehicle wireless power supply unit according to claim 1, further comprising an upper housing provided on the lower housing, the upper housing being configured to withstand a load from above and prevent water from entering an inside.

7. The vehicle wireless power supply unit according to claim 6, further comprising a support configured to transfer a load from the upper housing to the lower housing.

8. The vehicle wireless power supply unit according to claim 7,
wherein the support has a cylindrical shape for accommodating cables, and
wherein one end of the support in an axial direction of the cylindrical shape is in contact with the upper housing, the other end is in contact with the lower housing, and
wherein the support includes a take-out hole for cables at a position between the upper housing and the lower housing.

9. The vehicle wireless power supply unit according to claim 8,
wherein an upper surface of the upper housing is paved as a road, and
wherein the upper surface constitutes a part of a surface of the road.

10. The vehicle wireless power supply unit according to claim 9, further comprising a guidance portion configured to guide a vehicle at the upper surface of the upper housing.

11. The vehicle wireless power supply unit according to claim 10,
wherein the guidance portion has a protrusion shape in cross section and a rectangular shape in plan view, and
wherein a front end of the rectangular shape of the guidance portion in the traveling direction of the vehicle is disposed on a center side in the direction orthogonal to the traveling direction of the vehicle with respect to a rear end of the rectangular shape in the traveling direction of the vehicle.

12. The vehicle wireless power supply unit according to claim 1, wherein the plurality of power transfer coils are connected in parallel.

13. A vehicle wireless power supply system comprising:
the vehicle wireless power supply unit according to any one of claims 1 to 12;
a control apparatus configured to supply power to the power transfer coil;
a cable configured to supply power from the control apparatus to the vehicle wireless power supply unit; and
a sensor configured to detect an intrusion of a vehicle into a predetermined region,
wherein the control apparatus performs control of whether to supply power to the power transfer coil based on an output from the sensor.
